# EUROPEAN PATENT SPECIFICATION

(11) **EP 3 628 507 B1**
(45) Date of publication and mention of the grant of the patent: **07.06.2023**
(21) Application number: 18197809.9
(22) Date of filing: 28.09.2018
(51) Int. Cl.: B60B 3/16, F16B 23/00, F16B 41/00

(54) **AN ANTITHEFT LOCKING DEVICE FOR THE WHEEL OF A VEHICLE**
DIEBSTAHLSICHERUNGSVORRICHTUNG FÜR DAS RAD EINES FAHRZEUGS
DISPOSITIF DE VERROUILLAGE ANTIVOL POUR LA ROUE D'UN VÉHICULE

(43) Date of publication of application: 01.04.2020
(73) Proprietor: Gunnersbury Global Trade Limited, Dublin 12 (IE)
(72) Inventor: Ichim, Adrian, Dublin 12 (IE)
(74) Representative: Murgitroyd & Company

(56) References cited:
- EP-A1- 1 577 572
- EP-A1- 2 196 686
- EP-A1- 2 469 106
- EP-B1- 2 469 106
- WO-A1-2009/112469

## Description

### Field

The present invention refers to an antitheft locking device. More particularly, the invention refers to an antitheft locking device, in form of a fastener which may be a nut or bolt, for fixing a wheel to a motor vehicle hub.

### Background of The Invention

Antitheft locking devices are known for preventing the theft of wheels from vehicles. The antitheft locking devices are made in form of a threaded fastener, i.e. a nut or bolt which is used to fix a wheel to a hub. The fastener has a head with a shape which is selected not to co-operate with conventional tools for threaded fasteners.

Instead, a special antitheft key is required, which has a first end which is shaped to be complementary with the shape of the head so as to engage with the head of the fastener to allow the fastener to be turned by a traditional tool engaging with a second end of the key.

According to the prior art, the coupling between the complementary antitheft key and the head of the nut or bolt takes place through the engagement of a shaped projection, provided on the head of the key, with a corresponding complementary seat, provided in the head of the antitheft nut or bolt. As an alternative, the projection can be provided in the head of the nut or bolt and the complementary seat can be provided on the key.

As known in the prior art, the seat can assume, for example, the form of a continue or interrupted groove, shaped in different ways, or of a plurality of holes arranged in different ways.

To prevent grasping of the side surface of the fastener, it is known to fit a neutral bushing on the head of the fastener. The bushing is free to rotate about the fastener, i.e. the bushing can rotate neutral with respect to said head. An example of such a bushing is described in IT1 ,279,160, in which a steel elastic snap ring or circlip is employed to retain the bushing on the head. The snap ring is provided in a circumferential seat which is formed by complementary channels formed in the head and bushing.

The presence of a neutral mounted bushing, i.e. free to rotate around the body of the nut or bolt, prevents gripping of the fastener from outside with a traditional tool, such as for instance a pincer, vice grip or the like.

It will be appreciated that if the bushing is removed, that it would be possible to grip the outside of the fastener to undo it. Accordingly, it is known for thieves to attempt to do so.

A conventional approach by thieves attempting to remove the bushing is to insert the point of a chisel or screwdriver or similar tool at the bushing base and by hitting the chisel with a hammer or the like while simultaneously levering for withdrawing the bushing from the rest of the device. This technique can be effective.

In general, the withdrawal or breaking of the ring retaining the bushing is made possible by the fact that it is housed with a certain radial clearance inside a radial seat partially defined in the body of the device and partially defined in the bushing. The radial clearance is required to allow the mounting the bushing on the body of the device during assembly. It will be understood that by reducing the radial clearance, that assembly becomes more difficult and breakages are more likely during assembly.

EP2469106-A1 discloses an antitheft locking device which seeks to address this problem. More particularly, the seat is selected to have a shape that varies along the axial direction. This approach provides sufficient radial clearance during assembly but provides a reduced radial clearance when mounted thus reducing the ability of a thief to prise off the bushing. Whilst this device offers significant improvement over the earlier art, the approach leaves a gap at the bottom of the bushing in which a ring may be provided. The gap presents an opportunity for attack by a thief by more physical prising.

European Patent Application EP 1577572 discloses an unfastening prevention device which has nothing projecting outside the device and can prevent unfastening at either a head or distal end of a bolt. Prevention of unfastening is attained through use of a cap covering a screwed up fastening means formed of a bolt and a nut. In a groove formed on an inner surface of the cap, an outer periphery of a spring ring is engaged, an inner periphery of the spring ring being engaged in a groove of a holder, restricting axial direction and resulting in slip out prevention.

International PCT Application WO 2009/112469 discloses a screw portion for theft-protected fastening of a rim of a motor vehicle comprising a) a head comprising an encrypted drive surface for introduction of a torque, b) an annular body surrounding the head and having an outer surface, wherein an inner notch is provided in the annular body and an opposite outer notch is provided in the head and c) a non-circular spring washer that is disposed between the head and the annular body, engages with the inner notch and the outer notch and comprises outer areas that engage with the inner notch. It is characterized in that the spring washer is wavy and comprises inner areas, that the inner areas engage in the outer notch, that a peripheral mounting bevel is provided at the annular body and/or at the head, and that the mounting bevel is located in front of the respective notch in the mounting direction.

The present application seeks to provide an antitheft locking device for fixing a wheel of a motor vehicle, capable of resisting aggressive attacks directed to the forced removal of the neutral bushing.

At the same time, the present application aims to allow ease of assembly of a neutral bushing to the head of the threaded fastener.

### Summary

Accordingly, the present invention provides an antitheft locking device according to independent claim 1.

The deformable member may be positioned within the first groove. The radial thickness of the retaining element may greater than the depth of the second groove. The deformable member may have a non-deformed state and a deformed state, wherein in the deformed state the combined width of the deformable member and the retaining element in the radial direction correspond to the depth of one of the first and second grooves.

In one form, the deformable member may be an O-ring, possibly a rubber O-ring. The retaining element may be a circlip.

The body may have a distal end for abutting the wheel and a proximal end opposite the distal end. The distal end may have a frusto-conical shape.

The bushing may have a distal end and a proximal end and where the body has an abutment surface for abutting the distal end of the bushing.

The axial distance between the first groove and the abutment surface may be substantially the same as the axial distance between the distal end of the bushing and the second groove. The distal end of the bushing may have a bevelled edge about an inner side of the distal end, wherein said bevelled edge is employed during assembly to force the retaining element into the deformable element positioned in the first groove to allow the bushing to be placed down over the head.

The axial width of the first groove is substantially the same as the axial width of the second groove. The diameter of the deformable element in a non-deformed state may be approximately the same as the axial width of the first groove.

In another aspect a method of assembling an antitheft locking device of the type generally described above is provided, the method comprising the steps of:
placing a deformable member in the first groove;
placing the retaining element partially into the first groove, and
sliding the bushing onto the head of the device, the sliding action causing the retaining element to move inward into the first groove to allow the bushing to continue to slide over the head until the first and second grooves are in axial alignment allowing the retaining element to snap back into the second groove.

### Brief Description Of The Drawings

The present application will now be described with reference to the accompanying drawings in which elements denoted by the same numeral reference are components having the same or similar functionality and construction and in which:
Figure 1 is a profile view of a bushing and the body of a threaded fastener according to the invention;
Figure 2 is an assembled view of bushing and body of Figure 1;
Figure 3 is a side view of a radial seat defined by grooves in the bushing and body of Figure 1; and
Figure 4 illustrates the steps in the assembly of an antitheft locking device in accordance with the present invention.

### Detailed Description Of The Drawings

The present application overcomes the problems in the art by employing a deformable element to negate the effects of having to provide a radial clearance for a resilient retaining element to allow assembly.

The use of a deformable element makes assembly easier but at the same time ensures that removal of the bushing is particularly difficult.

A further advantage of the deformable element is that vibrational noise from the locking device is reduced.

With reference to the appended figures, an antitheft locking device according to an embodiment of the invention is shown.

The device 10 is a threaded fastener having a body for engaging and fastening to the hub of a motor vehicle, and in particular for fixing the rim of a wheel to a wheel hub.

The body 12 suitably has a generally cylindrical shape. The body may have a frusto-conical base 16, intended for abutting against a surface of a rim of a wheel.

For the purpose of fastening, the device 12 is provided either with a threaded stem 18 or with a threaded cavity (not shown) depending on whether it is made in form of a bolt or a nut.

In the first case, the threaded stem 18 having external threads (not shown) extends from the body so that the device 10 can be screwed into one of the threaded holes provided in the vehicle hub. In the second case, the cavity is suitably defined in the body 12 and threaded internally so that the device 10 can be screwed onto a corresponding stud provided in the vehicle hub.

In the case of the threaded stem, the stem may be integrally formed with the body or it may be fastened to the body, for example the body may be formed as a nut with the cavity previously described into which the threaded stem may be fastened.

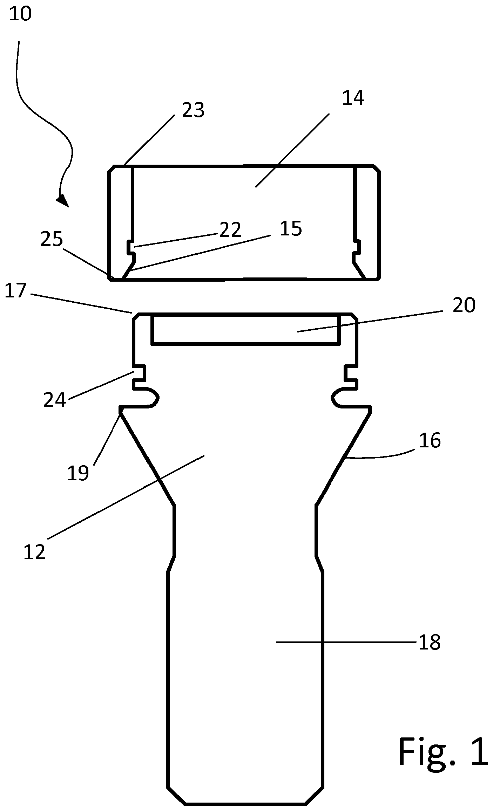

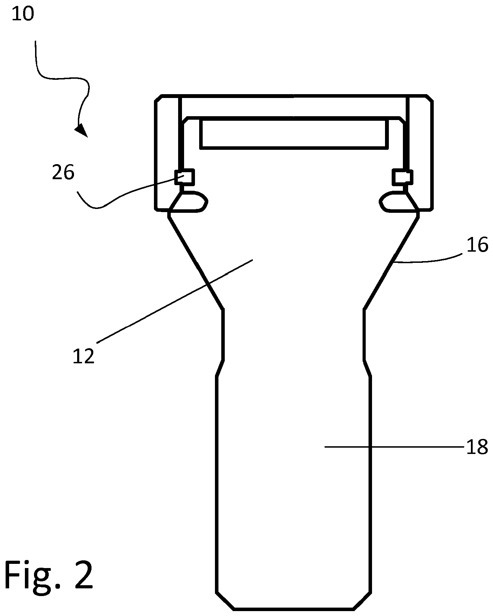

A bushing 14 is provided for placement around the body. In Figure 1, the bushing is shown above the body prior to assembly and in Figure 2 on the body in its normal mounted position.

The bushing 14 is free to rotate around the body 12. As such, the bushing may be regarded as a neutral bushing. The purpose of the neutral bushing is to prevent the ability to use a tool such as a pincer or vice grips to grip the outside of the body to try and rotate the body.

An engagement feature 20 for a special key (not shown) are provided on the head of the body. As an alternative, the engagement feature may be provided onto a radial projection defined at the base of the body of the device, for example as disclosed in EP2196686. In general, the engagement feature is shaped to correspond with the shape of the special key to allow the fastener to be turned. At the same time, the engagement feature is such that it is not amenable to rotation by conventional tools without the special key.

It will be appreciated that a variety of different approaches may be employed to form the engagement feature and corresponding key including using one or more shaped recesses or a pattern of holes for receiving corresponding protrusions on the key. The present application is not directed to the particular form of the engagement feature and co-operating key.

The body has a first groove 24 defined in the head about its circumference. A corresponding second groove 22 is formed in the bushing.

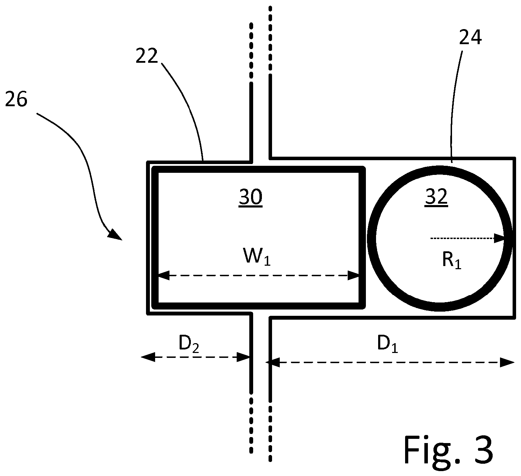

Once assembled, the first and second grooves are axially aligned and co-operate together to provide a radial seat 26, shown in Figure 3 in blown up section.

The purpose of the radial seat 26 is to house a retaining element 30 (omitted in Figures 1 and 2). The retaining element in turn acts to limit axial movement of the bushing relative to the head so as to prevent the bushing 14 being removed from the body 12.

The retaining element may be a circlip. The circlip is suitably resilient allowing the clip to expand from its default state to an expanded state as it is slid over the body. Once it reaches the first groove, the resilient nature of the circlip causes it to contract back to its default state.

In contrast to the arrangement of EP2469106-A1, the retaining element need not have a circular cross section, but may instead have, as shown, a rectangular cross section. The use of a rectangular profile means that the shearing load is spread across a greater surface area.

A deformable element 32 is also provided in the radial seat. In the arrangement shown, the deformable element is positioned in the first groove of the head. The deformable element is selected to be resilient so that when a deforming force is removed, the element may return from a deformed state to a non-deformed state. The purpose of the deformable element is to deform during assembly to allow the retaining element to contract from its default state into a contracted state in the first groove so as to permit the bushing to be slid onto the head of the fastener. The deformable element may be a ring, for example an O ring, formed from a resilient material. It will be appreciated that the ring need not be a closed ring. Examples of suitable resilient materials may include but are not limited to polymer, plastic, rubber. It will be appreciated that any material which is somewhat resilient and deformable can be employed.

Once the first and second grooves align, the resilient nature of the retaining element causes the retaining element to return so as to be positioned partially within the second groove and partially within the first groove.

At the same time, once assembled the deformable element acts to limit sidewise motion of the retaining element inwards into the first groove. As a result, the radial freedom of the retaining element is constrained and thus the ability of would be thieves to remove the bushing is significantly limited.

It will be appreciated that the use of this construction assures maximum resistance to theft, firstly because the bushing can freely rotate around the body of the device and secondly because the bushing is axially constrained to the body 13 of the device to prevent separation.

The axial width of the radial seat 26 corresponds substantively to the combined depths of the first groove (D₁) and second groove (D₂). This does not include the separation distance between the head and the bushing which is generally selected to be relatively small. The depth of the second groove 22 may be selected to be sufficient to accommodate half the axial width of the retaining element (W₁/2), i.e. so that the retaining element is evenly positioned between the first and second grooves.

The depth of the first groove 24 is selected to be sufficient to accommodate the entire width (W₁) of the retaining element and the deformable element when the deformable element is in a deformed state.

At the same time, the depth of the first groove 24 is selected to be sufficient to accommodate approximately half the axial width (W₁/2) of the retaining element and the diameter (2R₁) of the deformable element in a substantially non-deformed or partially deformed state. Using this approach, the problems in the art with radial clearance are eliminated.

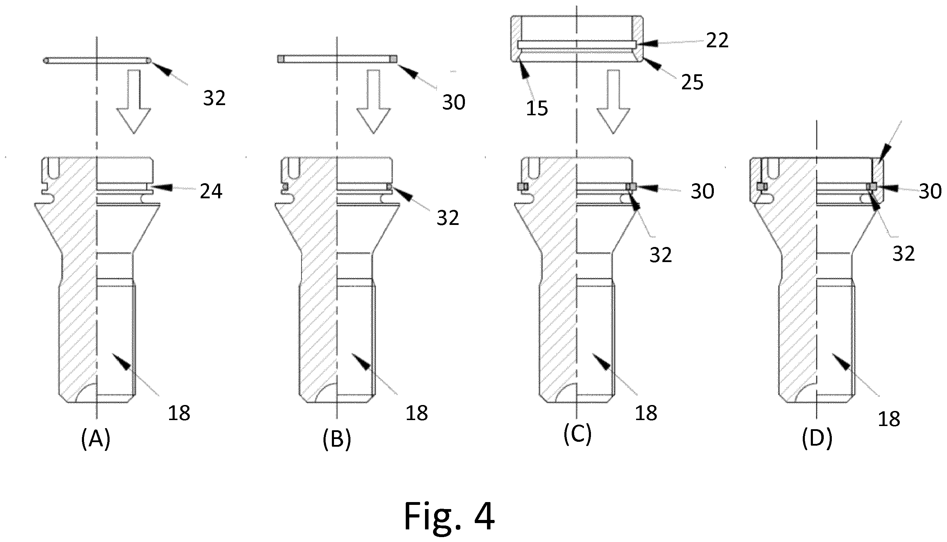

The device will now be further explained in the context of a method of assembling the device. In a first step of assembly (Step A of Figure 4), the deformable element 32 is slid onto the head of the device until it reaches and is retained in the first groove of the head (as shown in Step B). The retaining element is then slid (Step B) onto the head of the device and inserted into the first groove over the deformable element. A bevelled edge may be provided at the proximal end 17 of the head to facilitate expansion of the circlip as it is slid onto the head. The bushing 14 is then fitted on the body 12 of the device 10 until its distal end reaches the distal end of the head, at which point the first groove and second grooves are in axial alignment and the retaining element expands into the second groove and thus reaches the configuration of Figure 4D.

Once in this position, the presence of the retaining element in both the first and second grooves prevents the withdrawal of the bushing from the head.

Though the invention has been described with reference to a single retaining element, it is also possible to provide a plurality of said elements and consequently of seats circumferentially arranged.

Moreover, it is to be highlighted that the construction can be arranged in reverse so that the deformable element is provided in the groove of the bushing and the retaining element is placed in this groove and expands into this groove as the bushing is placed onto the head. It will be appreciated that in this construction the depth of the second groove will be less than that of the first groove. This construction is however less preferred over the first mode of construction.

## Claims

1. An antitheft locking device (10) in the form of a threaded fastener for fixing a wheel to a motor vehicle hub, the device comprising:
a body (12) comprising an engagement feature (20) for co-operation with a complementary key to permit rotation of the device (10),
a first groove (24) defined about the perimeter of the body (12);
a cylindrical bushing (14) freely rotatable around said body (12), the bushing having a second groove (22) opposing said first groove (24) and forming a radial seat (26) with the first groove (24) wherein the cylindrical bushing has a distal end which is open to allow the mounting of the bushing onto the body (12) and a proximal end which is open to allow access by the complementary key to the engagement feature when the bushing is mounted on the body (12);
a retaining element (30) provided in the radial seat for preventing the axial withdrawal of the bushing from the body (12) when the bushing is mounted on the body (12) **characterised in that** the device (10) further comprises a deformable member (32) provided in the radial seat to limit radial movement of the retaining element (30).

2. A device (10) according to claim 1, wherein the deformable member is positioned within the first groove (24).

3. A device (10) according to claim 2, wherein the radial thickness of the retaining element (30) is greater than the depth of the second groove (22).

4. A device (10) according to any preceding claim, wherein the deformable member has a non-deformed state and a deformed state, wherein in the deformed state the combined width of the deformable member and the retaining element (30) in the radial direction correspond to the depth of one of the first (24) and second grooves (26).

5. A device (10) according to any preceding claim, wherein the deformable member is an O-ring.

6. A device (10) according to claim 5, wherein the O-ring is a rubber O-ring.

7. A device (10) according to any preceding claim, wherein the retaining element (30) is a circlip.

8. A device (10) according to any preceding claim, wherein the body (12) comprises a distal end for abutting the wheel and a proximal end opposite the distal end.

9. A device (10) according to claim 8, wherein the distal end has a frusto-conical shape.

10. A device (10) according to any preceding claim, wherein the bushing has a distal end and a proximal end and where the body (12) has an abutment surface for abutting the distal end of the bushing.

11. A device (10) according to claim 10, wherein the axial distance between the first groove (24) and the abutment surface is substantially the same as the axial distance between the distal end of the bushing and the second groove (22).

12. A device (10) according to claim 11, wherein the distal end of the bushing has a bevelled edge about an inner side of the distal end, wherein said bevelled edge is employed during assembly to force the retaining element (30) into the deformable element (32) positioned in the first groove (24) to allow the bushing to be placed down over the head.

13. A device (10) according to any preceding claim, wherein the axial width of the first groove (24) is substantially the same as the axial width of the second groove (22).

14. A device (10) according to any preceding claim, wherein the diameter of the deformable element (32) in a non-deformed state is approximately the same as the axial width of the first groove (24).

15. A method of assembling an antitheft locking device (10) of the form claimed in any one of claims 1 to 14, comprising the steps of:
placing a deformable member in the first groove(24);
placing the retaining element (30) partially into the first groove (24), and
sliding the bushing onto the head of the device (10), the sliding action causing the retaining element (30) to move inward into the first groove (24) to allow the bushing to continue to slide over the head until the first (24) and second grooves (22) are in axial alignment allowing the retaining element (30) to snap back into the second groove (22).

## Patentansprüche

1. Eine Diebstahlsicherungsvorrichtung (10) in Form eines Verbindungselements mit Gewinde zum Sichern eines Rads an einer Radnabe eines Kraftfahrzeugs, wobei die Vorrichtung Folgendes beinhaltet:
einen Körper (12), der ein Eingriffsmerkmal (20) zum Zusammenwirken mit einem ergänzenden Schlüssel beinhaltet, um die Drehung der Vorrichtung (10) zu erlauben,
eine erste Nut (24), die um den Umfang des Körpers (12) definiert ist;
eine zylindrische Buchse (14), die um den Körper (12) frei drehbar ist, wobei die Buchse eine zweite Nut (22) aufweist, die der ersten Nut (24) gegenüberliegt und mit der ersten Nut (24) eine radiale Auflagefläche (26) bildet, wobei die zylindrische Buchse ein distales Ende, das offen ist, um das Montieren der Buchse auf dem Körper (12) zu gestatten, und ein proximales Ende, das offen ist, um Zugriff durch den ergänzenden Schlüssel auf das Eingriffsmerkmal zu gestatten, wenn die Buchse an dem Körper (12) montiert wird, aufweist;
ein Halteelement (30), das in der radialen Auflagefläche bereitgestellt ist, zum Verhindern der axialen Entnahme der Buchse aus dem Körper (12), wenn die Buchse an dem Körper (12) montiert ist, **dadurch gekennzeichnet, dass** die Vorrichtung (10) ferner ein verformbares Bauteil (32) beinhaltet, das in der radialen Auflagefläche bereitgestellt ist, um eine radiale Bewegung des Halteelements (30) zu begrenzen.

2. Vorrichtung (10) gemäß Anspruch 1, wobei das verformbare Bauteil innerhalb der ersten Nut (24) positioniert ist.

3. Vorrichtung (10) gemäß Anspruch 2, wobei die radiale Dicke des Halteelements (30) größer als die Tiefe der zweiten Nut (22) ist.

4. Vorrichtung (10) gemäß einem der vorhergehenden Ansprüche, wobei das verformbare Bauteil einen nicht verformten Zustand und einen verformten Zustand aufweist, wobei die kombinierte Breite des verformbaren Bauteils und des Halteelements (30) in dem verformten Zustand in der radialen Richtung der Tiefe einer der ersten (24) und der zweiten Nut (26) entspricht.

5. Vorrichtung (10) gemäß einem der vorhergehenden Ansprüche, wobei das verformbare Bauteil ein O-Ring ist.

6. Vorrichtung (10) gemäß Anspruch 5, wobei der O-Ring ein Kautschuk-O-Ring ist.

7. Vorrichtung (10) gemäß einem der vorhergehenden Ansprüche, wobei das Halteelement (30) ein Sicherungsring ist.

8. Vorrichtung (10) gemäß einem der vorhergehenden Ansprüche, wobei der Körper (12) ein distales Ende zum Anliegen an dem Rad und ein dem distalen Ende entgegengesetztes proximales Ende beinhaltet.

9. Vorrichtung (10) gemäß Anspruch 8, wobei das distale Ende eine Kegelstumpfform aufweist.

10. Vorrichtung (10) gemäß einem der vorhergehenden Ansprüche, wobei die Buchse ein distales Ende und ein proximales Ende aufweist und wobei der Körper (12) eine Anliegefläche zum Anliegen an dem distalen Ende der Buchse aufweist.

11. Vorrichtung (10) gemäß Anspruch 10, wobei der axiale Abstand zwischen der ersten Nut (24) und der Anliegefläche im Wesentlichen derselbe wie der axiale Abstand zwischen dem distalen Ende der Buchse und der zweiten Nut (22) ist.

12. Vorrichtung (10) gemäß Anspruch 11, wobei das distale Ende der Buchse eine abgeschrägte Kante um eine Innenseite des distalen Endes aufweist, wobei die abgeschrägte Kante während des Zusammenbaus genutzt wird, um das Halteelement (30) in das verformbare Bauteil (32), das in der ersten Nut (24) positioniert ist, zu pressen, um es der Buchse zu gestatten, über dem Kopf abgesetzt zu werden.

13. Vorrichtung (10) gemäß einem der vorhergehenden Ansprüche, wobei die axiale Breite der ersten Nut (24) im Wesentlichen dieselbe wie die axiale Breite der zweiten Nut (22) ist.

14. Vorrichtung (10) gemäß einem der vorhergehenden Ansprüche, wobei der Durchmesser des verformbaren Bauteils (32) in einem nicht verformten Zustand ungefähr derselbe ist wie die axiale Breite der ersten Nut (24).

15. Ein Verfahren zum Zusammenbauen einer Diebstahlsicherungsvorrichtung (10) der in einem der Ansprüche 1 bis 14 beanspruchten Form, das die folgenden Schritte beinhaltet:
Platzieren eines verformbaren Bauteils in der ersten Nut (24);
Platzieren des Halteelements (30) zum Teil in der ersten Nut (24), und
Schieben der Buchse auf den Kopf der Vorrichtung (10), wobei der Schiebevorgang bewirkt, dass sich das Halteelement (30) nach innen in die erste Nut (24) bewegt, um der Buchse zu gestatten, sich weiter über den Kopf zu schieben, bis die erste (24) und die zweite Nut (22) axial gefluchtet sind, was es dem Halteelement (30) gestattet, in die zweite Nut (22) zurückzuschnappen.

## Revendications

1. Un dispositif de verrouillage antivol (10) sous la forme d'une fixation filetée pour attacher une roue à un moyeu de véhicule motorisé, le dispositif comprenant :
un corps (12) comprenant une caractéristique de mise en prise (20) pour une coopération avec une clé complémentaire afin d'autoriser une rotation du dispositif (10), une première rainure (24) définie autour du périmètre du corps (12) ;
une douille cylindrique (14) librement rotative autour dudit corps (12), la douille ayant une deuxième rainure (22) opposée à ladite première rainure (24) et formant une assise radiale (26) avec la première rainure (24), la douille cylindrique ayant une extrémité distale qui est ouverte afin de permettre le montage de la douille sur le corps (12) et une extrémité proximale qui est ouverte afin de permettre l'accès par la clé complémentaire à la caractéristique de mise en prise lorsque la douille est montée sur le corps (12) ;
un élément de retenue (30) fourni dans l'assise radiale pour empêcher le retrait axial de la douille depuis le corps (12) lorsque la douille est montée sur le corps (12) **caractérisé en ce que** le dispositif (10) comprend en outre un organe déformable (32) fourni dans l'assise radiale afin de limiter un déplacement radial de l'élément de retenue (30).

2. Un dispositif (10) selon la revendication 1, dans lequel l'organe déformable est positionné au sein de la première rainure (24).

3. Un dispositif (10) selon la revendication 2, dans lequel l'épaisseur radiale de l'élément de retenue (30) est supérieure à la profondeur de la deuxième rainure (22).

4. Un dispositif (10) selon n'importe quelle revendication précédente, dans lequel l'organe déformable a un état non déformé et un état déformé, dans lequel, dans l'état déformé, la largeur combinée de l'organe déformable et de l'élément de retenue (30) dans la direction radiale correspond à la profondeur d'une des première rainure (24) et deuxième rainure (26).

5. Un dispositif (10) selon n'importe quelle revendication précédente, dans lequel l'organe déformable est un joint torique.

6. Un dispositif (10) selon la revendication 5, dans lequel le joint torique est un joint torique en caoutchouc.

7. Un dispositif (10) selon n'importe quelle revendication précédente, dans lequel l'élément de retenue (30) est un circlip.

8. Un dispositif (10) selon n'importe quelle revendication précédente, dans lequel le corps (12) comprend une extrémité distale pour être en aboutement contre la roue et une extrémité proximale opposée à l'extrémité distale.

9. Un dispositif (10) selon la revendication 8, dans lequel l'extrémité distale a une conformation tronconique.

10. Un dispositif (10) selon n'importe quelle revendication précédente, dans lequel la douille a une extrémité distale et une extrémité proximale et où le corps (12) a une surface d'aboutement pour être en aboutement contre l'extrémité distale de la douille.

11. Un dispositif (10) selon la revendication 10, dans lequel la distance axiale entre la première rainure (24) et la surface d'aboutement est substantiellement la même que la distance axiale entre l'extrémité axiale de la douille et la deuxième rainure (22).

12. Un dispositif (10) selon la revendication 11, dans lequel l'extrémité distale de la douille a un bord biseauté autour d'un côté interne de l'extrémité distale, ledit bord biseauté étant employé durant l'assemblage afin de pousser l'élément de retenue (30) jusque dans l'organe déformable (32) positionné dans la première rainure (24) pour permettre à la douille d'être placée par-dessus la tête.

13. Un dispositif (10) selon n'importe quelle revendication précédente, dans lequel la largeur axiale de la première rainure (24) est substantiellement la même que la largeur axiale de la deuxième rainure (22).

14. Un dispositif (10) selon n'importe quelle revendication précédente, dans lequel le diamètre de l'organe déformable (32) dans un état non déformé est approximativement le même que la largeur axiale de la première rainure (24).

15. Un procédé d'assemblage d'un dispositif de verrouillage antivol (10) de la forme revendiquée dans n'importe laquelle des revendications 1 à 14, comprenant les étapes consistant :
à placer un organe déformable dans la première rainure (24) ;
à placer l'élément de retenue (30) partiellement jusque dans la première rainure (24), et
à faire coulisser la douille sur la tête du dispositif (10), l'action de coulissement amenant l'élément de retenue (30) à se déplacer vers l'intérieur jusque dans la première rainure (24) afin de permettre à la douille de continuer à coulisser par-dessus la tête jusqu'à ce que les première rainure (24) et deuxième rainure (22) soient dans un alignement axial permettant à l'élément de retenue (30) de revenir d'un coup sec jusque dans la deuxième rainure (22).
